# EUROPEAN PATENT APPLICATION

(11) **EP 2 843 812 A2**
(43) Date of publication of application: **04.03.2015**
(21) Application number: 14182550.5
(22) Date of filing: 27.08.2014
(51) Int. Cl.: H02K 21/24, H02K 9/06

(54) **Axial gap-type power generator**

(30) Priority: 29.08.2013 JP 2013177761
(71) Applicant: Kabushiki Kaisha Toshiba, Tokyo 105-8001 (JP)
(72) Inventor: JIMBO, Tomohiko, Minato-ku, Tokyo (JP); MATSUOKA, Kei, Minato-ku, Tokyo (JP); KABATA, Yasuo, Minato-ku, Tokyo (JP); INOMATA, Asako, Minato-ku, Tokyo (JP); TANIYAMA, Yoshihiro, Minato-ku, Tokyo (JP)
(74) Representative: Granleese, Rhian Jane

(57) **Abstract**

An axial gap-type power generator in an embodiment includes a rotor provided with a magnet and a stator provided with a coil, the rotor and the stator being arranged via a gap in an axial direction of a rotation shaft. Further, a blade is installed at the rotor and the blade generates a cooling wind by rotation of the rotor. Here, the blade is installed at the rotor so that the cooling wind flows through the gap between the rotor and the stator from an inside to an outside in a radial direction of the rotation shaft.

## Description

### FIELD

Embodiments described herein relate generally to an axial gap-type power generator.

### BACKGROUND

In an axial gap-type power generator, a stator and a rotor are installed via a gap, along an axial direction of a rotation shaft. In the axial gap-type power generator, the stator is provided with a coil and the rotor is provided with a magnet (permanent magnet). The axial gap-type power generator is installed, for example, in a wind power generator

In the axial gap-type power generator, since heat generation occurs in a power generation operation, it is necessary to cool the stator and the rotor. Therefore, the axial gap-type power generator is configured such that a cooling wind flows through a gap between the stator and the rotor. For example, in the case of an "open type" in which the stator and the rotor are not housed in a housing, wind flowing in from the surroundings is used as a cooling wind.

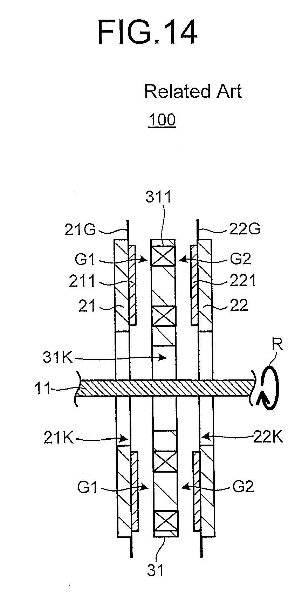

Fig. 14 is a view illustrating an axial gap-type power generator according to a first related art. Fig. 14 illustrates a cross section of the axial gap-type power generator.

As illustrated in Fig. 14, an axial gap-type power generator 100 is, for example, an open type and has a pair of rotors 21, 22 and a stator 31.

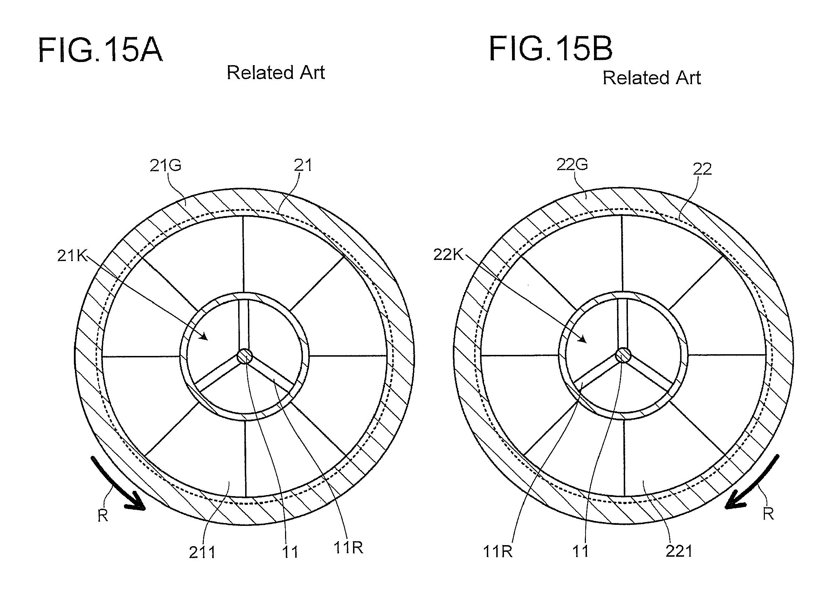

Fig.15A and Fig.15B are views illustrating the rotors in the axial gap-type power generator according to the first related art. Fig. 15A illustrates a first rotor 21 of the pair of rotors 21, 22, and Fig. 15B illustrates a second rotor 22. Fig.15A illustrates a surface of the first rotor 21 facing the second rotor 22. Fig. 15B illustrates a surface of the second rotor 22 facing the first rotor 21.

In the axial gap-type power generator 100, the first rotor 21 and the second rotor 22 are provided with openings 21K, 22K at their central portions respectively as illustrated in Fig 14, Fig. 15A, and Fig. 15B, and a rotation shaft 11 passes through the openings 21K, 22K. As illustrated in Fig. 15A, and Fig. 15B, the first rotor 21 and the second rotor 22 are connected to the rotation shaft 11 via ribs 11R.

Further, as illustrated in Fig. 14, Fig. 15A, and Fig. 15B, the first rotor 21 and the second rotor 22 have magnets 211, 221, respectively. A plurality of each of magnets 211, 221 are provided on surfaces facing each other of the first rotor 21 and the second rotor 22, respectively. In addition, guides 21G, 22G are provided at outer peripheral portions at the first rotor 21 and the second rotor 22, respectively.

In the axial gap-type power generator 100, the stator 31 is installed between the first rotor 21 and the second rotor 22 as illustrated in Fig. 14. The stator 31 has the gaps G1, G2 intervening with respect to the first rotor 21 and the second rotor 22, respectively. The stator 31 is formed with an opening 31K at its central portion, and the rotation shaft 11 passes through the opening 31K.

Further, the stator 31 has a coil 311 as illustrated in Fig. 14. The coil 311 is embedded inside the stator 31. Though not illustrated, a plurality of the coils 311 are arranged in a rotation direction R (circumferential direction) of the rotation shaft 11 similarly to the plurality of magnets 211, 221. The coil 311 is covered, for example, with an insulator (not illustrated) such as a resin and is thus insulated from the surroundings.

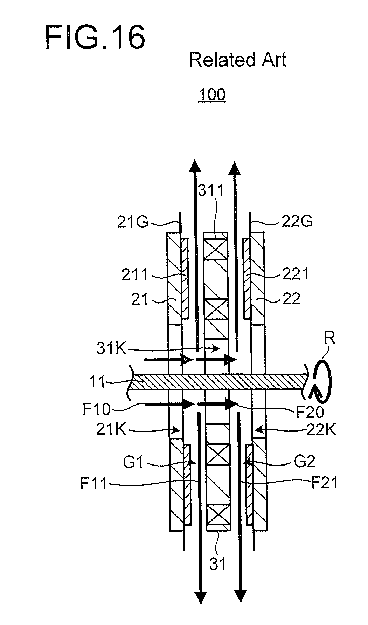

Fig.16 is a view illustrating a flow of the cooling wind in the axial gap-type power generator according to the first related art. Fig. 16 illustrates, similarly to Fig. 14, the cross section of the axial gap-type power generator, and schematically illustrates the outline of the cooling wind flowing in the cross section.

When the axial gap-type power generator 100 is the open type as illustrated in Fig. 16, the wind flowing in from the surroundings of the axial gap-type power generator 100 is used as cooling winds F10, F11, F20, F21. Here, for example, the wind flowing from the side of the first rotor 21 to the side of the second rotor 22 is used as the cooling winds F10, F11, F20, F21 in the axial gap-type power generator 100.

More specifically, the cooling wind F10 is guided from the surroundings of the axial gap-type power generator 100 to the opening 21K of the first rotor 21. The cooling wind F10 flows from the side of the first rotor 21 to the side of the second rotor 22 in the axial direction of the rotation shaft 11, and passes through the opening 21K of the first rotor 21. Then, the cooling wind F10 passed through the opening 21K of the first rotor 21 flows into the gap G1 between the first rotor 21 and the stator 31 and flows into the opening 31K of the stator 31. The cooling wind F11 flowed into the gap G1 between the first rotor 21 and the stator 31 flows from the inside to the outside in the radial direction of the rotation shaft 11. Then, the cooling wind F20 flowed into the opening 31K of the stator 31 flows into the gap G2 between the second rotor 22 and the stator 31 after passing through the opening 31K. The cooling wind F21 flowed into the gap G2 between the second rotor 22 and the stator 31 flows from the inside to the outside in the radial direction of the rotation shaft 11.

As in the above manner, cooling is performed for the first rotor 21, the second rotor 22, and the stator 31 in the axial gap-type power generator 100.

However, in the axial gap-type power generator 100, the cooling cannot be sufficiently performed to result in a decrease in power generation performance or the like in some cases. For example, when the rotation shaft 11 rotates through inertia in the case where there is weak or no wind in the surroundings, sufficient cooling wind does not flow into the gaps G1, G2 between the stator 31 and the rotors 21, 22, and therefore the cooling is insufficient. This may result in that the magnets increased in temperature are not sufficiently cooled in the axial gap-type power generator 100 to undergo demagnetization, thereby decreasing the power generation output.

For this reason, there are suggested various methods for effectively performing cooling in the axial gap-type power generator.

For example, it is suggested that a radial fan is installed on a surface of the rotor opposite to a surface thereof facing the stator and an air-exhaust port is provided outside in the radial direction. Further, a heat release fin is installed at an outer peripheral part of the stator and a cooling fan is installed at an outer peripheral part of the rotor to send a cooling wind to the heat release fin and the like are suggested. Further, it is suggested that a cooling passage is formed in the rotor and a fan is installed on the rotation shaft to send a cooling wind to the cooling passage

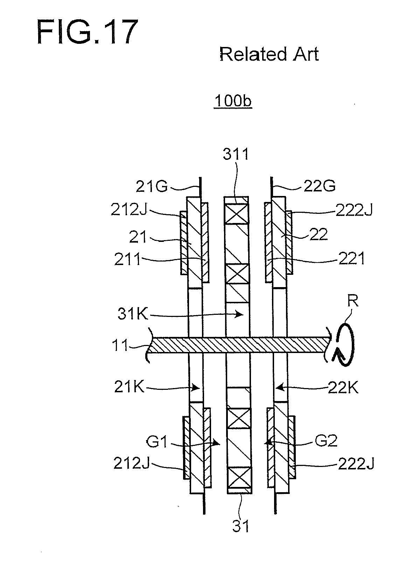

Fig. 17 is a view illustrating an axial gap-type power generator according to a second related art. Fig. 17 illustrates, similarly to Fig. 14, a cross section of the axial gap-type power generator.

As illustrated in Fig. 17, in an axial gap-type power generator 100b, different from the above-described axial gap-type power generator 100 (see, for example, Fig. 14 and so on), blades 212J, 222J are installed at the first rotor 21 and the second rotor 22 respectively to effectively performing the cooling.

Specifically, the blades 212J are installed on a surface of the first rotor 21 opposite to a surface thereof facing the second rotor 22. Further, the blades 222J are installed on a surface of the second rotor 22 opposite to a surface thereof facing the first rotor 21.

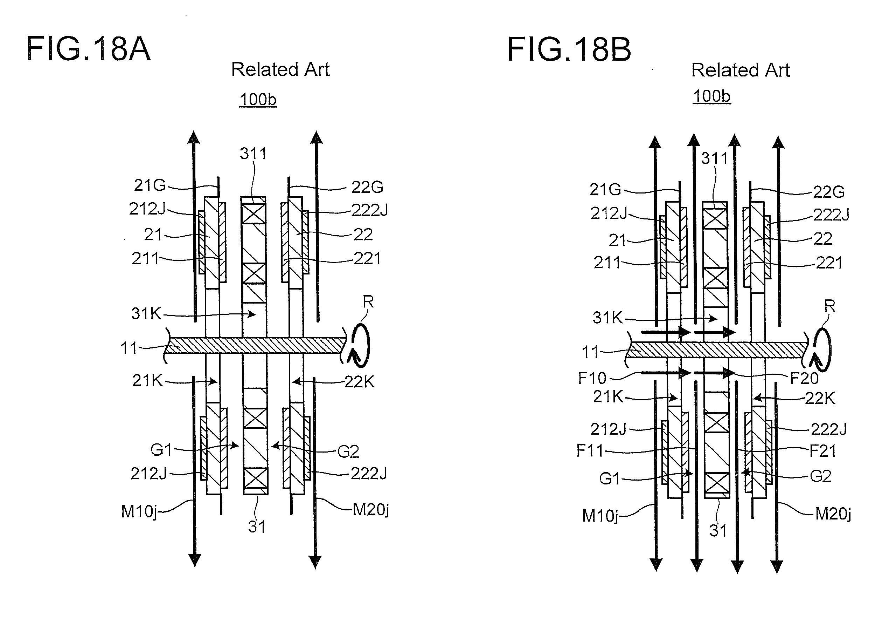

Fig.18A and Fig.18B are views illustrating a flow of the cooling wind in the axial gap-type power generator according to the second related art. Fig.18A and Fig.18B illustrate the cross section of the axial gap-type power generator, similarly to Fig. 17, and schematically illustrates the outline of the cooling wind flowing in the cross section. Fig. 18A illustrates the case where there is no wind around the axial gap-type power generator 100b, and Fig. 18B illustrates the case where wind flows in as the cooling wind from the surroundings of the axial gap-type power generator100b.

As illustrated in Fig. 18A, when the rotation shaft 11 rotates through inertia in the case where there is no wind in the surroundings, cooling winds M10j, M20j are generated by the blades 212J, 222J and flow. Here, the cooling wind M10j flows from the inside to the outside in the radial direction of the rotation shaft 11, on the side of the surface of the first rotor 21 opposite to the surface thereof facing the second rotor 22. Further, the cooling wind M20j flows from the inside to the outside in the radial direction of the rotation shaft 11, on the side of the surface of the second rotor 22 opposite to the surface thereof facing the first rotor 21.

As illustrated in Fig. 18B, when the rotation shaft 11 rotates in the case where wind in the surroundings flows in as the cooling wind, the cooling winds M10j, M20j are generated by the blades 212J, 222J and flow, as in the case illustrated in Fig. 18(a). In addition, the cooling winds F10, F11, F20, F21 flow, as in the case illustrated in Fig. 16.

However, as is found from Fig. 18A and Fig. 18B, when the axial gap-type power generator 100b is the open type, the cooling winds M10j, M20j generated by the blades 212J, 222J do not flow through the gap G1 between the first rotor 21 and the stator 31 nor the gap G2 between the second rotor 22 and the stator 31.

Therefore, also in the axial gap-type power generator 100b, the cooling is not sufficient to cause a decrease in reliability and a decrease in power generation performance in some cases. For example, the magnets 211, 221 increased in temperature are not sufficiently cooled to undergo demagnetization, thereby decreasing the power generation output in some cases.

### BRIEF DESCRIPTION OF THE DRAWINGS

Fig. 1 is a view illustrating an axial gap-type power generator according to a first embodiment.
Fig.2A and Fig.2B are views illustrating rotors in the axial gap-type power generator according to the first embodiment.
Fig. 3 is a view illustrating blades enlarged in the axial gap-type power generator according to the first embodiment.
Fig.4A and Fig.4B are views illustrating a flow of a cooling wind in the axial gap-type power generator according to the first embodiment.
Fig. 5 is a view illustrating the flow of the cooling wind in the axial gap-type power generator according to the first embodiment.
Fig. 6 is a view illustrating an axial gap-type power generator according to a second embodiment.
Fig.7A and Fig.7B are views illustrating rotors in the axial gap-type power generator according to the second embodiment.
Fig.8A and Fig.8B are views illustrating a flow of a cooling wind in the axial gap-type power generator according to the second embodiment.
Fig.9A and Fig.9B are views illustrating the flow of the cooling wind in the axial gap-type power generator according to the second embodiment.
Fig. 10 is a view illustrating an axial gap-type power generator according to a third embodiment.
Fig.11A and Fig.11B are views illustrating rotors in the axial gap-type power generator according to the third embodiment.
Fig.12A and Fig.12B are views illustrating a flow of a cooling wind in the axial gap-type power generator according to the third embodiment.
Fig.13A and Fig.13B are views illustrating the flow of the cooling wind in the axial gap-type power generator according to the third embodiment.
Fig. 14 is a view illustrating an axial gap-type power generator according to a first related art.
Fig.15A and Fig.15B are views illustrating rotors in the axial gap-type power generator according to the first related art.
Fig. 16 is a view illustrating a flow of a cooling wind in the axial gap-type power generator according to the first related art.
Fig. 17 is a view illustrating an axial gap-type power generator according to a second related art.
Fig. 18 is a view illustrating a flow of a cooling wind in the axial gap-type power generator according to the second related art.

### DETAILED DESCRIPTION

Embodiments will be explained referring to the drawings.

An axial gap-type power generator in an embodiment includes a rotor provided with a magnet and a stator provided with a coil, the rotor and the stator being arranged via a gap in an axial direction of a rotation shaft. Further, a blade is installed at the rotor and the blade generates a cooling wind by rotation of the rotor. Here, the blade is installed at the rotor so that the cooling wind flows through the gap between the rotor and the stator from an inside to an outside in a radial direction of the rotation shaft.

### <First Embodiment>

### [A] Configuration of Axial Gap-Type Power Generator

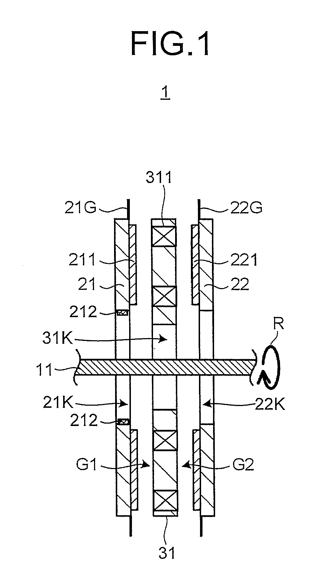

Fig. 1 is a view illustrating an axial gap-type power generator according to a first embodiment. Fig. 1 illustrates its cross section.

As illustrated in Fig. 1, an axial gap-type power generator 1 is, for example, an open type and has a pair of rotors 21, 22 and a stator 31.

Though not illustrated, the axial gap-type power generator 1 is installed in an upwind-type wind power generator in which a plurality of windmill blades (not illustrated) extending along a radial direction of a rotation shaft 11 are fixed, for example, to the first rotor 21 and the second rotor 22. In the axial gap-type power generator 1, the plurality of windmill blades (not illustrated) receive wind flowing from the side of the first rotor 21 to the side of the second rotor 22 in the axial direction of the rotation shaft 11 and the rotation shaft 11 thereby rotates to perform power generation.

Components constituting the axial gap-type power generator 1 will be described in sequence.

### [A-1] Regarding Pair of Rotors 21, 22

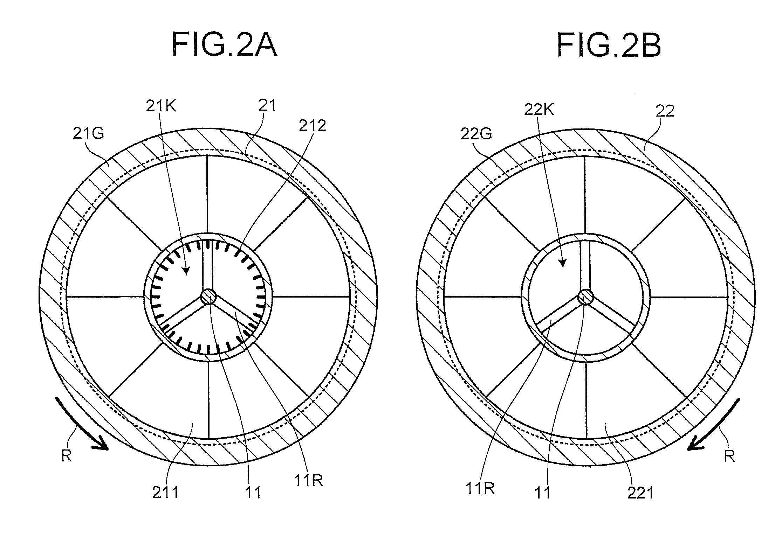

Fig.2A and Fig.2B are views illustrating the rotors in the axial gap-type power generator according to the first embodiment.

Fig. 2A illustrates the first rotor 21 of the pair of rotors 21, 22, and Fig. 2B illustrates the second rotor 22. Fig. 2A illustrates a surface of the first rotor 21 facing the second rotor 22. Fig. 2B illustrates a surface of the second rotor 22 facing the first rotor 21.

In the axial gap-type power generator 1, the first rotor 21 and the second rotor 22 are plate-shaped bodies in a ring shape as illustrated in Fig. 1, Fig. 2A, Fig. 2B, and are formed with circular openings 21K, 22K at their central portions, respectively. The opening 21K of the first rotor 21 and the opening 22K of the second rotor 22 are formed to be equal in inner diameter to each other.

Both of the first rotor 21 and the second rotor 22, in which the rotation shaft 11 passes through the circular openings 21K, 22K as illustrated in Fig. 1, are installed to be coaxial with the rotation shaft 11. Both of the first rotor 21 and the second rotor 22 are connected to the rotation shaft 11 via ribs 11R as illustrated in Fig. 2A, Fig. 2B. More specifically, in each of the openings 21K, 22K of the first rotor 21 and the second rotor 22, a plurality of ribs 11R are provided to extend along the radial direction of the rotation shaft 11, and each of the plurality of ribs 11R has one end portion fixed to the rotation shaft 11 and the other end portion fixed to the first rotor 21 or the second rotor 22. Note that though not illustrated, the rotation shaft 11 is rotatably supported by a bearing (not illustrated). Further, the illustration of the ribs 11R is omitted in Fig. 1.

The first rotor 21 and the second rotor 22 have magnets 211, 221 (permanent magnets) respectively as illustrated in Fig. 1, Fig. 2A, Fig. 2B. As illustrated in Fig. 1, the magnets 211, 221 are provided on surfaces of the first rotor 21 and the second rotor 22 facing each other, respectively. The magnets 211, 221 are arranged such that their magnetization directions are along the axial direction of the rotation shaft 11. As illustrated in Fig. 2A and Fig. 2B, a plurality of each of the magnets 211, 221 are arranged around the rotation shaft 11 on the first rotor 21 and the second rotor 22 respectively so that their polarities are alternate in a rotation direction R of the rotation shaft 11.

Further, the first rotor 21 and the second rotor 22 are provided with guides 21G, 22G as illustrated in Fig. 1, Fig. 2A, Fig. 2B, respectively. The guides 21G, 22G are plate-shaped bodies in a ring shape and provided at outer peripheral portions of the first rotor 21 and the second rotor 22, respectively. The guides 21G, 22G are smaller in thickness than the first rotor 21 and the second rotor 22, and provided at portions on the sides of surfaces of the first rotor 21 and the second rotor 22 facing each other, respectively.

In this embodiment, a plurality of blades 212 are installed at the first rotor 21 as illustrated in Fig. 1, Fig. 2A.

The plurality of blades 212 are provided on an inner peripheral surface of the first rotor 21 as illustrated in Fig. 1, Fig. 2A. The plurality of blades 212 are arrayed to line up at regular intervals in the rotation direction R of the rotation shaft 11 inside the opening 21K of the first rotor 21. Though details will be described later, the plurality of blades 212 are configured such that when they are rotated with the rotation of the rotation shaft 11, a cooling wind (not illustrated) flows from the side of the first rotor 21 to the side of the second rotor 22.

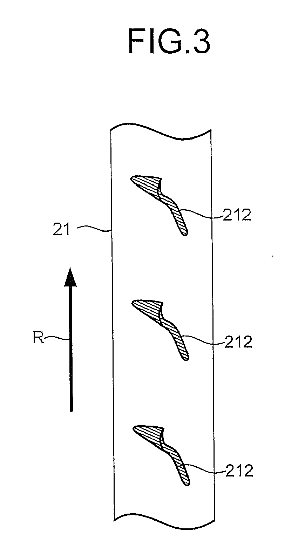

Fig. 3 is a view illustrating the blades enlarged in the axial gap-type power generator according to the first embodiment.

Fig. 3 illustrates a part of the inner peripheral surface of the first rotor 21 in which the right side is the stator 31 side.

As illustrated in Fig. 3, each of the plurality of blades 212 is formed such that one end portion on the side of the stator 31 (right side) is located posterior in the rotation direction R to the other end portion.

### [A-2] Regarding Stator 31

In the axial gap-type power generator 1, the stator 31 is installed between the first rotor 21 and the second rotor 22 as illustrated in Fig. 1. A gap G1 intervenes between the stator 31 and the first rotor 21, and a gap G2 intervenes between the stator 31 and the second rotor 22. Though not illustrated, the stator 31 is supported by a support member (not illustrated).

As illustrated in Fig. 1, the stator 31 is formed with an opening 31K at its central portion. The opening 31K of the stator 31 is a circle through which the rotation shaft 11 passes. The stator 31 is installed to be coaxial with the rotation shaft 11 as with the first rotor 21 and the second rotor 22. The opening 31K of the stator 31 is formed to be smaller in inner diameter than the opening 21K of the first rotor 21 and the opening 22K of the second rotor 22.

Further, as illustrated in Fig. 1, the stator 31 has a coil 311. The coil 311 is embedded inside the stator 31. Though not illustrated, a plurality of the coils 311 are arranged in the rotation direction R of the rotation shaft 11 as with the plurality of magnets 211, 221. The coils 311 are covered with, for example, an insulator (not illustrated) such as a resin and thus electrically insulated from the surroundings.

### [B] Regarding Flow of Cooling Wind

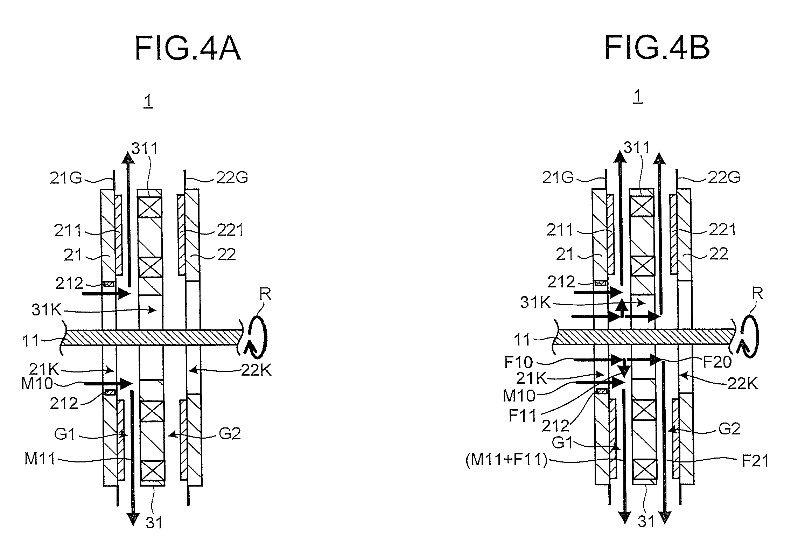

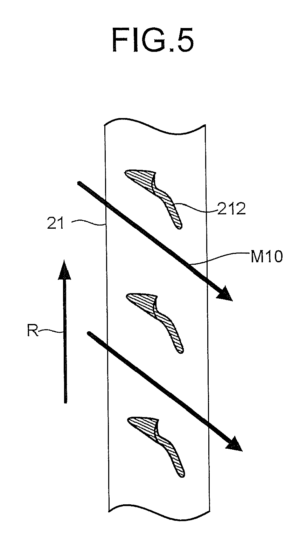

Fig.4A, Fig.4B, and Fig. 5 are views illustrating the flow of the cooling wind in the axial gap-type power generator according to the first embodiment.

Fig. 4A and Fig. 4B illustrate, similarly to Fig. 1, the cross section of the axial gap-type power generator, and schematically illustrate the outline of the cooling wind flowing in the cross section. Fig. 4A illustrates the case where there is no wind around the axial gap-type power generator 1. Fig. 4B illustrates the case where wind flows in as the cooling wind from the surroundings of the axial gap-type power generator 1. Further, Fig. 5 illustrates, similarly to Fig. 3, the blades 212 enlarged, and schematically illustrates the outline of the cooling wind flowing in the enlarged part.

As illustrated in Fig. 4A, when the rotation shaft 11 rotates through inertia in the case where there is no wind in the surroundings, a cooling wind M10 is generated by the blades 212 and flows. The cooling wind M10 flows from the first rotor 21 to the side of the second rotor 22. More specifically, as illustrated in Fig. 5, the cooling wind M10 flows between the plurality of blades 212.

Thereafter, the cooling wind M10 hits against the surface of the stator 31 on the side of the first rotor 21 and then flows into the gap G1 between the first rotor 21 and the stator 31 as illustrated in Fig. 4A. Then, a cooling wind M11 flowed into the gap G1 between the first rotor 21 and the stator 31 flows from the inside to the outside in the radial direction of the rotation shaft 11.

As illustrated in Fig. 4B, when the rotation shaft 11 rotates in the case where wind flows in as the cooling wind from the surroundings, a cooling wind M10 is generated by the blades 212 and flows through the parts, as in the case illustrated in Fig. 4A.

In addition, when the rotation shaft 11 rotates in the case where the wind flows in as the cooling wind from the surroundings, cooling winds F10, F11, F20, F21 flow through the parts as illustrated in Fig. 4B, as in the case illustrated in Fig. 16. Namely, the wind flowing from the side of the first rotor 21 to the side of the second rotor 22 is used as the cooling winds F10, F11, F20, F21.

More specifically, as illustrated in Fig. 4B, the cooling wind F10 is guided from the surroundings of the axial gap-type power generator 1 to the opening 21K of the first rotor 21. The cooling wind F10 flows from the side of the first rotor 21 to the side of the second rotor 22 in the axial direction of the rotation shaft 11, and passes through the opening 21K of the first rotor 21. Then, the cooling wind F10 passed through the opening 21K of the first rotor 21 flows into the gap G1 between the first rotor 21 and the stator 31. The cooling wind F11 flowed into the gap G1 between the first rotor 21 and the stator 31 flows from the inside to the outside in the radial direction of the rotation shaft 11.

Therefore, in this embodiment, as illustrated in Fig. 4B, both of the cooling wind F11 flowed in from the surroundings and the cooling wind M11 generated by the blades 212 and flowed in flow through the gap G1 between the first rotor 21 and the stator 31. In short, a cooling wind (M 11 + F 11) made by combining both of the winds flows from the inside to the outside in the radial direction.

As is understood from the above, the amount of the cooling wind flowing through the gap G1 between the first rotor 21 and the stator 31 can be increased in this embodiment.

### [C] Conclusion

As described above, in the axial gap-type power generator 1 in this embodiment, the blades 212 generating the cooling wind M10 by the rotation of the first rotor 21 are installed at the first rotor 21. Here, the blades 212 are installed at the first rotor 21 so that the cooling wind M11 flows through the gap G1 between the first rotor 21 and the stator 31 from the inside to the outside in the radial direction of the rotation shaft 11 by the cooling wind M10 generated by the blades 212. Therefore, the flow rate of the cooling wind flowing through the gap G1 between the first rotor 21 and the stator 31 increases as described above in this embodiment (see Fig. 4A, Fig. 4B and so on).

Accordingly, in this embodiment, it is possible to effectively cool the first rotor 21 and the stator 31, thereby realizing the improvement in reliability and the improvement in power generation performance. For example, it is possible to effectively cool the coils 311 increased in temperature due to the power generation operation. Further, it is possible to effectively cool the magnets 211 increased in temperature, thereby suppressing occurrence of demagnetization and preventing a decrease in power generation output.

### [D] Modification Example

The case where the opening 31K of the stator 31 is smaller in inner diameter than the opening 21K of the first rotor 21 and the opening 22K of the second rotor 22 has been described in the above embodiment, but it is not limited to this. For example, the opening 31K of the stator 31 may be larger in inner diameter than the opening 21K of the first rotor 21 and the opening 22K of the second rotor 22. In this case, when the cooling wind M10 generated by the blades 212 flows through the opening 31K of the stator 31 after passing through the opening 21K of the first rotor 21, the cooling wind M10 hits against, for example, the ribs 11R installed between the second rotor 22 and the rotation shaft 11, and flows into the gap G2 between the second rotor 22 and the stator 31. Then, similarly to the above, the cooling wind flows through the gap G2 between the second rotor 22 and the stator 31 from the inside to the outside in the radial direction of the rotation shaft 11 (see Fig. 4A, Fig. 4B and so on).

The case where the axial gap-type power generator 1 is the "open type" and the first rotor 21, the second rotor 22, and the stator 31 are not accommodated in a housing has been described in the above embodiment, but they are not limited to this. The first rotor 21, the second rotor 22, and the stator 31 may be accommodated in a housing.

The case where the axial gap-type power generator 1 is used for the wind power generator has been described in the above embodiment, but it is not limited to this. The axial gap-type power generator 1 may be used for another device.

The case where there are two rotors 21, 22 and one stator 31 has been described in the above embodiment, but they are not limited to this. The axial gap-type power generator may be configured such that, for example, there are two stators and one rotor located between the two stators.

### <Second Embodiment>

### [A] Configuration of Axial Gap-Type Power Generator

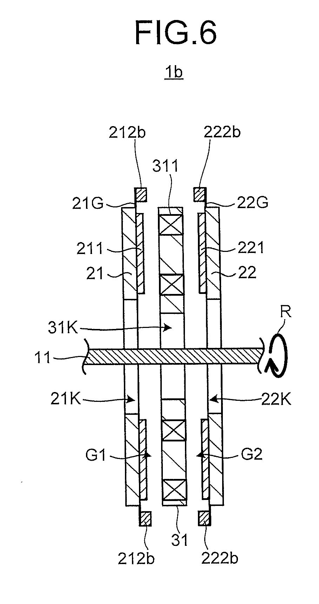

Fig. 6 is a view illustrating an axial gap-type power generator according to a second embodiment. Fig. 6 illustrates, similarly to Fig. 1, its cross section.

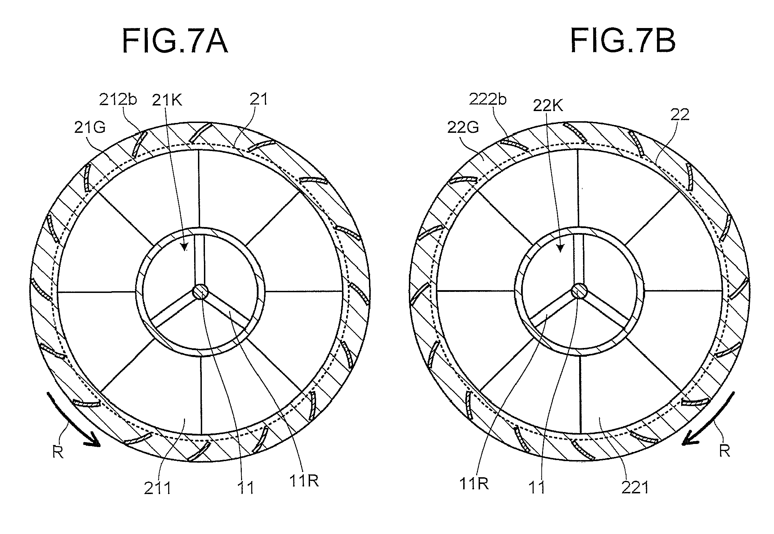

Fig.7A and Fig.7B are views illustrating rotors in the axial gap-type power generator according to the second embodiment. Fig. 7A illustrates, similarly to Fig. 2A, the first rotor 21 of the pair of rotors 21, 22, and Fig. 7B illustrates, similarly to Fig. 2B, the second rotor 22.

This embodiment is different from the first embodiment in installation positions of blades 212b, 222b as illustrated in Fig. 6, Fig. 7A, Fig. 7B. Except this point and points related to this, this embodiment is the same as the first embodiment. Therefore, description of portions overlapped with those of the first embodiment will be accordingly omitted in this embodiment.

In this embodiment, as illustrated in Fig. 6, Fig. 7A, Fig. 7B, the blades 212b, 222b are provided on surfaces facing each other of the guide 21G of the first rotor 21 and the guide 22G of the second rotor 22 respectively, different from those in the first embodiment. Though details will be described later, the blades 212b, 222b are configured such that when they rotate with the rotation of the rotation shaft 11, a cooling wind (not illustrated) flows from the inside to the outside in the radial direction of the rotation shaft 11.

More specifically, at the first rotor 21, the plurality of blades 212b are arrayed at regular intervals in a rotation direction R of the rotation shaft 11 as illustrated in Fig. 7A. Each of the plurality of blades 212b is formed such that one end portion located on the inside in the radial direction is located anterior in the rotation direction R to the other end portion located on the outside.

At the second rotor 22, the plurality of blades 222b are arrayed at regular intervals in the rotation direction R of the rotation shaft 11 as illustrated in Fig. 7B. Each of the plurality of blades 222b is formed such that one end portion located on the inside in the radial direction is located anterior in the rotation direction R to the other end portion located on the outside.

### [B] Regarding Flow of Cooling Wind

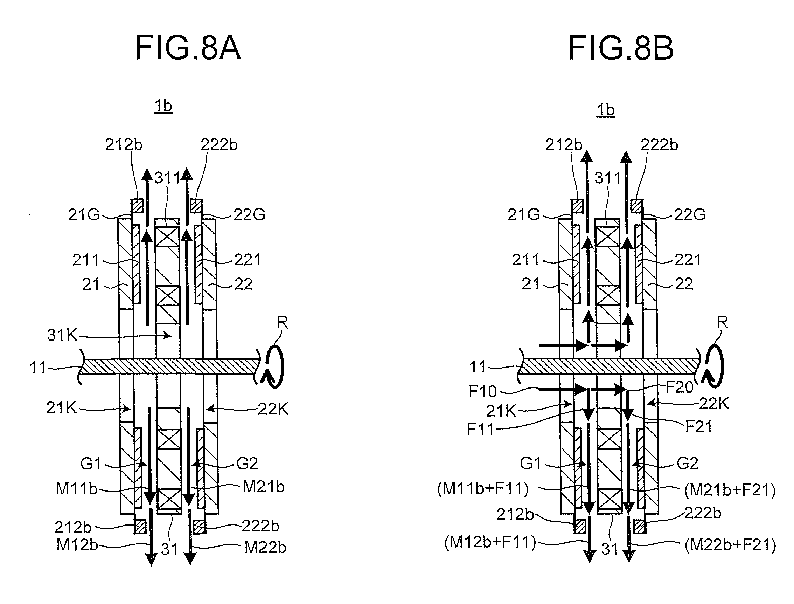

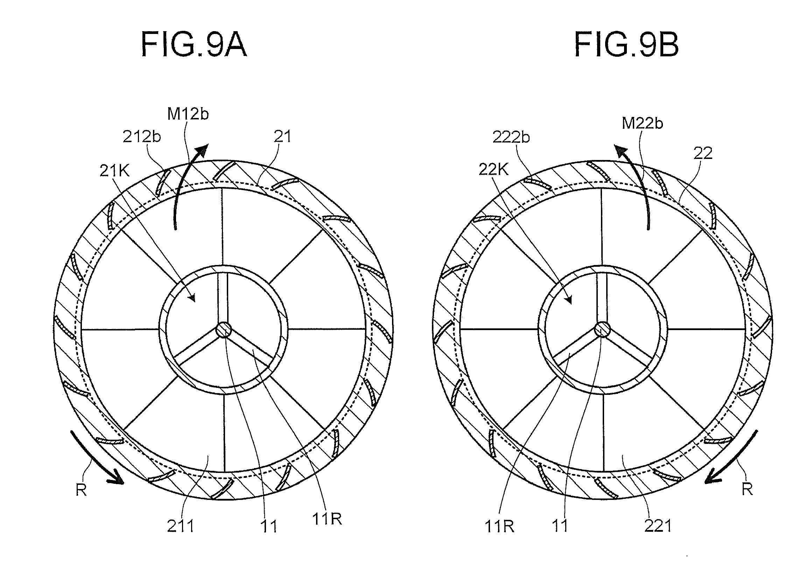

Fig.8A, Fig.8b, Fig.9A, and Fig.9B are views illustrating the flow of the cooling wind in the axial gap-type power generator according to the second embodiment.

Fig. 8A and Fig. 8B illustrate, similarly to Fig. 6, the cross section of the axial gap-type power generator, and schematically illustrate the outline of the cooling wind flowing in the cross section. Here,

Fig. 8A illustrates the case where there is no wind around the axial gap-type power generator, and Fig. 8B illustrates the case where wind flows in as the cooling wind from the surroundings of the axial gap-type power generator. Further, Fig. 9A illustrates, similarly to Fig. 7A, the first rotor 21 of the pair of rotors 21, 22, and Fig. 9B illustrates, similarly to Fig. 7B, the second rotor 22. Fig. 9A and Fig. 9B schematically illustrate the outline of the cooling winds flowing through the first rotor 21 and the second rotor 22, respectively.

As illustrated in Fig. 8A, when the rotation shaft 11 rotates through inertia in the case where there is no wind in the surroundings, cooling winds M12b, M22b are generated by the blades 212b, 222b and flow. The cooling winds M12b, M22b flow from the inside to the outside in the radial direction of the rotation shaft 11. More specifically, as illustrated in Fig. 9A and Fig. 9B, the cooling winds M12b, M22b flow between the plurality of blades 212b, 222b. Therefore, as illustrated in Fig 8A, air in the gap G1 between the first rotor 21 and the stator 31 and in the gap G2 between the second rotor 22 and the stator 31 flows from the inside to the outside by the cooling winds M12b, M22b generated by the blades 212b, 222b. In other words, a cooling wind M11b flows through the gap G1 between the first rotor 21 and the stator 31 and a cooling wind M21b flows through the gap G2 between the second rotor 22 and the stator 31.

As illustrated in Fig. 8B, when the rotation shaft 11 rotates in the case where the cooling wind flows in from the surroundings, the cooling winds M12b, M22b are generated by the blades 212b, 222b and flow as in the case illustrated in Fig. 8A. Therefore, similarly to the case illustrated in Fig. 8A, the cooling wind M11b flows through the gap G1 between the first rotor 21 and the stator 31 and the cooling wind M21b flows through the gap G2 between the second rotor 22 and the stator 31.

In addition, when the rotation shaft 11 rotates in the case where the wind flows in as the cooling wind from the surroundings, the cooling winds F10, F11, F20, F21 flow as illustrated in Fig. 8B, as in the case illustrated in Fig. 16. Namely, the cooling wind F11 flows through the gap G1 between the first rotor 21 and the stator 31 from the inside to the outside in the radial direction of the rotation shaft 11. Further, the cooling wind F21 flows through the gap G2 between the second rotor 22 and the stator 31 from the inside to the outside in the radial direction of the rotation shaft 11.

Therefore, in this embodiment, as illustrated in Fig. 8B, both of the cooling wind F11 flowed in from the surroundings and the cooling wind M11b generated by the blades 212b flow through the gap G1 between the first rotor 21 and the stator 31. In short, a cooling wind (M11b+ F 11) made by combining both of the winds flows from the inside to the outside in the radial direction. Further, both of the cooling wind F11 flowed in from the surroundings and the cooling wind M12b generated by the blades 212b flow also outside the gap G1.

Similarly to the above, in this embodiment, as illustrated in Fig. 8B, both of the cooling wind F21 flowed in from the surroundings and the cooling wind M21b generated by the blades 222b flow also through the gap G2 between the second rotor 22 and the stator 31. In short, a cooling wind (M21b+ F21) made by combining both of the winds flows from the inside to the outside in the radial direction. Further, both of the cooling wind F21 flowed in from the surroundings and the cooling wind M22b generated by the blades 222b flow also outside the gap G2.

As is understood from the above, in this embodiment, the amounts of the cooling winds flowing respectively through the gap G1 between the first rotor 21 and the stator 31 and through the gap G2 between the second rotor 22 and the stator 31 can be increased.

### [C] Conclusion

As described above, an axial gap-type power generator 1b in this embodiment has the blades 212b, 222b. Here, the blades 212b are installed at the first rotor 21 so that the cooling wind M11b flows through the gap G1 between the first rotor 21 and the stator 31 from the inside to the outside in the radial direction of the rotation shaft 11 with the rotation of the rotation shaft 11. Further, the blades 222b are installed at the second rotor 22 so that the cooling wind M21b flows through the gap G2 between the second rotor 22 and the stator 31 from the inside to the outside in the radial direction of the rotation shaft 11 with the rotation of the rotation shaft 11. As a result, in this embodiment, the flow rates of the cooling winds flowing respectively through the gap G1 between the first rotor 21 and the stator 31 and through the gap G2 between the second rotor 22 and the stator 31 increase as described above (see Fig. 8A, Fig. 8B and so on).

Accordingly, in this embodiment, it is possible to effectively cool the first rotor 21, the second rotor 22, and the stator 31, thereby realizing the improvement in reliability and the improvement in power generation performance. For example, it is possible to effectively cool the coils 311 increased in temperature due to the power generation operation. Further, it is possible to effectively cool the magnets 211, 221 increased in temperature, thereby suppressing occurrence of demagnetization and preventing a decrease in power generation output.

Note that in this embodiment, the blades 212b, 222b are provided on the surfaces facing each other of the guide 21G of the first rotor 21 and the guide 22G of the second rotor 22, respectively. In other words, since the blades 212b, 222b are provided at portions outside in the radial direction of the gap G1 between the first rotor 21 and the stator 31 and the gap G2 between the second rotor 22 and the stator 31 in this embodiment. Therefore, in this embodiment, the blades 212b, 222b are not provided between the first rotor 21 and the stator 31 and between the second rotor 22 and the stator 31, thereby suppressing the breakage and so on of the blades 212b, 222b. Further, the gaps G1, G2 can be narrowed.

### [D] Modification Example

The case where the blades 212b are installed at the guide 21G of the first rotor 21 and the blades 222b are installed at the guide 22G of the second rotor 22 has been described in the above embodiment, but they are not limited to this. The blades are preferably installed at both of the guides but may be installed at one of them.

### <Third Embodiment>

### [A] Configuration of Axial Gap-Type Power Generator

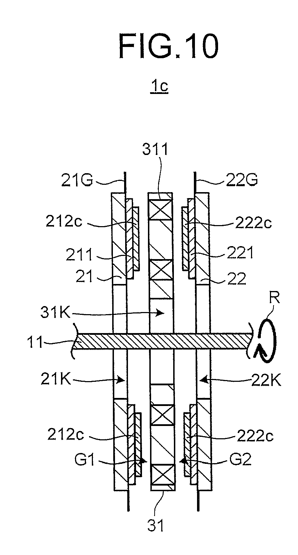

Fig. 10 is view illustrating an axial gap-type power generator according to a third embodiment. Fig. 10 illustrates, similarly to Fig. 1, its cross section.

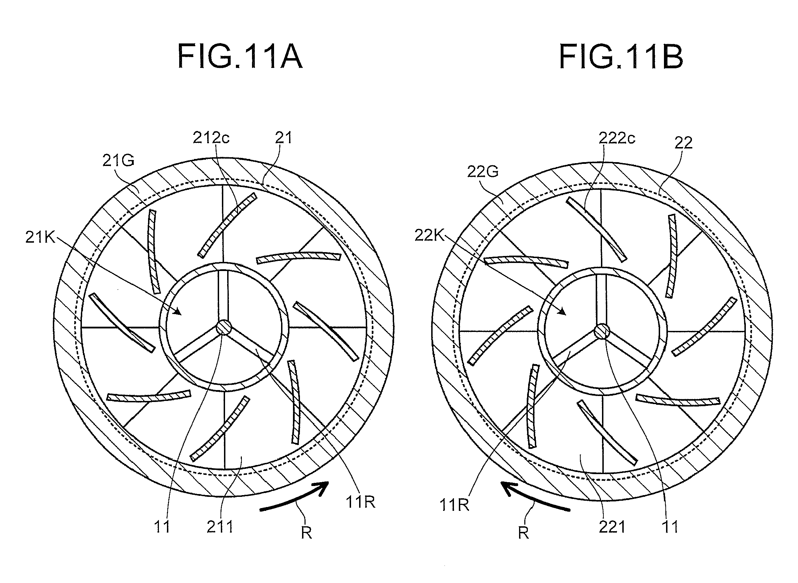

Fig.11A and Fig.11B are views illustrating rotors in the axial gap-type power generator according to the third embodiment. Fig. 11A illustrates, similarly to Fig. 2A, the first rotor 21 of the pair of rotors 21, 22, and Fig. 11B illustrates, similarly to Fig. 2B, the second rotor 22.

This embodiment is different from the first embodiment in installation positions of blades 212c, 222c as illustrated in Fig. 10, Fig. 11A, Fig. 11B. Except this point and points related to this, this embodiment is the same as the first embodiment. Therefore, description of portions overlapped with those of the first embodiment will be accordingly omitted in this embodiment.

In this embodiment, as illustrated in Fig. 10, Fig. 11A, Fig. 11B, the blades 212c, 222c are provided on a surface of the first rotor 21 facing the stator 31 and a surface of the second rotor 22 facing the stator 31, different from those in the first embodiment. Though details will be described later, the blades 212c, 222c are configured such that when they rotate with the rotation of the rotation shaft 11, a cooling wind (not illustrated) flows from the inside to the outside in the radial direction of the rotation shaft 11.

More specifically, at the first rotor 21, the blades 212c are installed on the magnets 211 as illustrated in Fig. 10. At the first rotor 21, a plurality of blades 212c are arrayed at regular intervals in the rotation direction R of the rotation shaft 11 as illustrated in Fig. 11A. Each of the plurality of blades 212c is formed such that one end portion located on the inside in the radial direction is located anterior in the rotation direction R to the other end portion located on the outside.

Similarly, at the second rotor 22, the blades 222c are also installed on the magnets 221 as illustrated in Fig. 10. Further, at the second rotor 22, a plurality of blades 222c are arrayed at regular intervals in the rotation direction R of the rotation shaft 11 as illustrated in Fig. 11B. Each of the plurality of blades 222c is formed such that one end portion located on the inside in the radial direction is located anterior in the rotation direction R to the other end portion located on the outside.

### [B] Regarding Flow of Cooling Wind

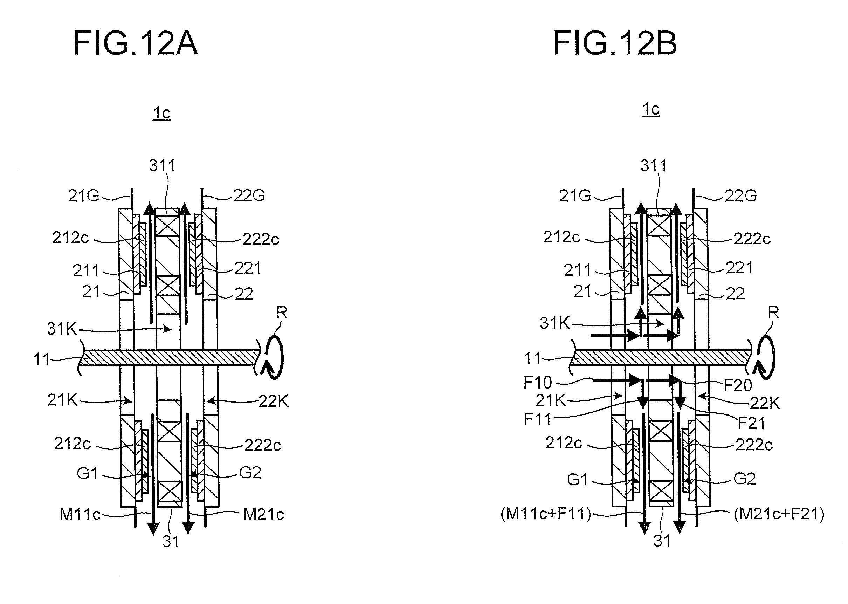

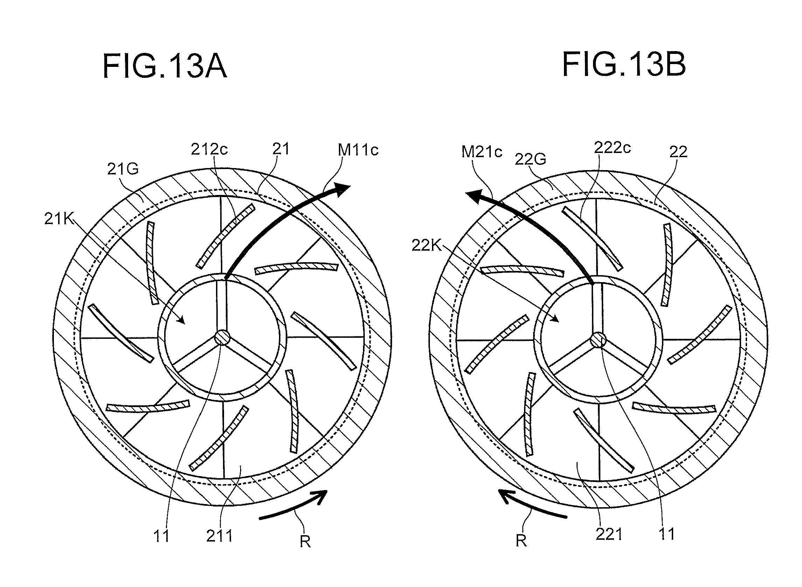

Fig.12A, Fig.12B, Fig.13 and Fig.13B are views illustrating the flow of the cooling wind in the axial gap-type power generator according to the third embodiment.

Fig. 12A and Fig. 12B illustrate, similarly to Fig. 10, the cross section of the axial gap-type power generator, and schematically illustrate the outline of the cooling wind flowing in the cross section. Here, Fig. 10A illustrates the case where there is no wind around the axial gap-type power generator, and

Fig. 10B illustrates the case where wind flows in as the cooling wind from the surroundings of the axial gap-type power generator. Further, Fig. 13A illustrates, similarly to Fig. 11A, the first rotor 21 of the pair of rotors 21, 22, and Fig. 13B illustrates, similarly to Fig. 11B, the second rotor 22. Fig. 13A and Fig. 13B schematically illustrate the outline of the cooling winds flowing through the first rotor 21 and the second rotor 22, respectively.

As illustrated in Fig. 12A, when the rotation shaft 11 rotates through inertia in the case where there is no wind in the surroundings, cooling winds M11c, M21c are generated by the blades 212c, 222c and flow. The cooling winds M11c, M21c flow from the inside to the outside in the radial direction of the rotation shaft 11 through the gap G1 between the first rotor 21 and the stator 31 and through the gap G2 between the second rotor 22 and the stator 31. More specifically, as illustrated in Fig. 13A and Fig. 13B, the cooling winds M11c, M21c flow between the plurality of blades 212b, 222c.

As illustrated in Fig. 12B, when the rotation shaft 11 rotates in the case where the cooling wind flows in from the surroundings, the cooling winds M11c, M21c are generated by the blades 212c, 222c and flow. Therefore, similarly to the case illustrated in Fig. 12A, the cooling wind M11c flows through the gap G1 between the first rotor 21 and the stator 31, and the cooling wind M21c flows through the gap G2 between the second rotor 22 and the stator 31.

In addition, when the rotation shaft 11 rotates in the case where the wind flows in as the cooling wind from the surroundings, the cooling winds F10, F11, F20, F21 flow as illustrated in Fig. 12B, as in the case illustrated in Fig. 16. Namely, the cooling wind F11 flows through the gap G1 between the first rotor 21 and the stator 31 from the inside to the outside in the radial direction of the rotation shaft 11. Further, the cooling wind F21 flows through the gap G2 between the second rotor 22 and the stator 31 from the inside to the outside in the radial direction of the rotation shaft 11.

Therefore, in this embodiment, as illustrated in Fig. 12B, both of the cooling wind F11 flowed in from the surroundings and the cooling wind M11c generated by the blades 212c flow through the gap G1 between the first rotor 21 and the stator 31. In short, a cooling wind (M11c + F11) made by combining both of the winds flows from the inside to the outside in the radial direction.

Similarly to the above, in this embodiment, as illustrated in Fig. 12B, both of the cooling wind F21 flowed in from the surroundings and the cooling wind M21c generated by the blades 222c flow also through the gap G2 between the second rotor 22 and the stator 31. In short, a cooling wind (M21c + F21) made by combining both of the winds flows from the inside to the outside in the radial direction.

As is understood from the above, in this embodiment, the amounts of the cooling winds flowing respectively through the gap G1 between the first rotor 21 and the stator 31 and through the gap G2 between the second rotor 22 and the stator 31 can be increased.

### [C] Conclusion

As described above, an axial gap-type power generator 1c in this embodiment has the blades 212c, 222c. Here, the blades 212c are installed at the first rotor 21 so that the cooling wind M11c generated by the rotation of the blades 212c flows through the gap G1 between the first rotor 21 and the stator 31 from the inside to the outside in the radial direction. In addition, the blades 222c are installed at the second rotor 22 so that the cooling wind M21c generated by the rotation of the blades 222c flows through the gap G2 between the second rotor 22 and the stator 31 from the inside to the outside in the radial direction. As a result, in this embodiment, the flow rates of the cooling winds flowing respectively through the gap G1 between the first rotor 21 and the stator 31 and through the gap G2 between the second rotor 22 and the stator 31 increase as described above (see Fig. 12A, Fig. 12B and so on).

Accordingly, in this embodiment, it is possible to effectively cool the first rotor 21, the second rotor 22, and the stator 31, thereby realizing the improvement in reliability and the improvement in power generation performance. For example, it is possible to effectively cool the coils 311 increased in temperature due to the power generation operation. Further, it is possible to effectively cool the magnets 211, 221 increased in temperature, thereby suppressing occurrence of demagnetization and preventing a decrease in power generation output.

Note that in this embodiment, the blades 212c, 222c are provided on the surface of the first rotor 21 facing the stator 31 and the surface of the second rotor 22 facing the stator 31. In other words, the blades 212c are installed at the first rotor 21 to be sandwiched between the first rotor 21 and the stator 31, and the blades 222c are installed at the second rotor 22 to be sandwiched between the second rotor 22 and the stator 31. Therefore, in this embodiment, the cooling winds M11c, M21c are generated and flow from the inside to the outside in the radial direction through the gap G1 between the first rotor 21 and the stator 31 and through the gap G2 between the second rotor 22 and the stator 31, and therefore can perform more effective cooling.

### [D] Modification Example

The case where the blades 212c are installed at the first rotor 21 and the blades 222c are installed at the second rotor 22 has been described in the above embodiment, but they are not limited to this. The blades are preferably installed at both of the rotors but may be installed at one of them.

### <Others>

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An axial gap-type power generator comprising:
a rotor provided with a magnet;
a stator provided with a coil, the rotor and the stator being arranged via a gap in an axial direction of a rotation shaft;
a blade installed at the rotor and configured to generate a cooling wind by rotation of the rotor, the cooling wind flowing through the gap between the rotor and the stator from an inside to an outside in a radial direction of the rotation shaft.

2. The axial gap-type power generator according to claim 1,
wherein the rotor is formed with an opening at a central portion thereof, and the blade is included which is provided on an inner peripheral surface of the rotor.

3. The axial gap-type power generator according to claim 1 or 2,
wherein the blade is included which is provided at a portion of the rotor outside in the radial direction of the gap between the rotor and the stator.

4. The axial gap-type power generator according to any one of claims 1 to 3,
wherein the blade is included which is installed at the rotor to be sandwiched between the rotor and the stator.
